# EUROPEAN PATENT SPECIFICATION

(11) **EP 3 852 237 B1**
(45) Date of publication and mention of the grant of the patent: **03.04.2024**
(21) Application number: 19859188.5
(22) Date of filing: 11.09.2019
(51) Int. Cl.: H02K 1/14, H02K 3/52

(54) **MOTOR**
MOTOR
MOTEUR

(30) Priority: 11.09.2018 KR 20180108437
(43) Date of publication of application: 21.07.2021
(73) Proprietor: LG Innotek Co., Ltd., Seoul 07796 (KR)
(72) Inventor: KIM, Seong Jin, Seoul 07796 (KR)
(74) Representative: M. Zardi & Co S.A.
(86) International application number: PCT/KR2019/011808
(87) International publication number: WO 2020/055151

(56) References cited:
- WO-A1-2018/147610
- JP-A- 2008 278 694
- JP-A- 2013 211 956
- KR-A- 20110 077 819
- KR-A- 20170 052 980
- KR-B1- 101 551 362

## Description

### [Technical Field]

Embodiments relate to a motor.

### [Background Art]

A motor includes a shaft, a rotor, and a stator. The stator includes a plurality of teeth. For insulation, insulators are provided on the teeth. A coil is wound on the insulator. In the case of a motor to which power is dually supplied, two coils may be wound on one insulator. In this case, winding two times is necessary. WO2018/147610 is an example of a motor, which discloses the preamble of claim 1.

### [Disclosure]

### [Technical Problem]

The present invention is directed to providing a motor in which two coils are wound on one insulator in a one-time winding process.

### [Technical Solution]

The present invention is defined in claim 1. Preferred embodiments of the invention are claimed in claims 2 to 8. A motor is disclosed, the motor including a housing, a stator disposed in the housing, a rotor disposed in the stator, and a shaft coupled to the rotor. Here, the stator includes a stator core, an insulator disposed on the stator core, and a coil disposed on the insulator. The insulator includes a body on which the coil is disposed, a first guide extending from one side of the body, and a first protrusion and a second protrusion which protrude from a top surface of the first guide. Also, the first protrusion and the second protrusion are disposed to be spaced apart from each other to form a space in a circumferential direction on the basis of a center of the stator.

The first guide includes a first inner surface and a first outer surface. The first protrusion and the second protrusion are disposed between the first inner surface and the first outer surface on the basis of a lateral direction of the first guide.

Each of the first protrusion and the second protrusion include a second inner surface, a second outer surface, and a groove. The groove is disposed on the second outer surface and disposed along the lateral direction of the first guide.

Each of the first protrusion and the second protrusion may be disposed while being spaced apart from an edge formed by the top surface and a side surface of the first guide.

On the basis of a reference line passing through a center of the body in a lateral direction, the first protrusion may be disposed on one side of the reference line. The second protrusion may be disposed on the other side of the reference line, and the first protrusion and the second protrusion may be disposed to be symmetrical on the basis of the reference line.

The body may include a first body and a second body disposed inside the first body, and the insulator may include a second guide protruding upward from the body between the first body and the second body.

The first protrusion and the second protrusion may include areas protruding further than the second guide in a lateral direction of the insulator.

The coil may include a first coil wound on the first body and a second coil wound on the second body.

The first coil may include a first end disposed on one side and a second end disposed on the other side on the basis of the reference line, and the second coil may include a third end disposed on one side and a fourth end disposed on the other side on the basis of the reference line.

The motor may include a terminal disposed above the stator. Here, the terminal may include a first terminal and a second terminal. The first terminal may be coupled to the first end and the third end, and the second terminal may be coupled to the second end and the fourth end.

The motor may include a terminal disposed above the stator. Here, the terminal may include a first terminal and a second terminal. The first terminal may include a 1-1 terminal and a 1-2 terminal. The second terminal may include a 2-1 terminal and a 2-2 terminal. The 1-1 terminal may be coupled to the first end. The 1-2 terminal may be coupled to the third end. The 2-1 terminal may be coupled to the second end, and the 2-2 terminal may be coupled to the fourth end.

The first terminal may be any one of a U-phase terminal, a V-phase terminal, and a W-phase terminal, and the second terminal may be a neutral terminal.

### [Advantageous Effects]

According to an embodiment, since positions of terminal ends of coils are aligned, advantageous effects in manufacturing automation and increasing a quality of fusing coils are provided.

### [Description of Drawings]

FIG. 1 is a view illustrating a motor according to an embodiment.
FIG. 2 is a view illustrating a stator core and an insulator.
FIG. 3 is a perspective illustrating the insulator.
FIG. 4 is a plan view illustrating the insulator.
FIG. 5 is a view illustrating a coated part of a coil.
FIG. 6 is a view illustrating a winding process.
FIG. 7 is a view illustrating the coil after being cut.
FIG. 8 is a view illustrating connection between a terminal and the coil.
FIG. 9 is a view illustrating connection between a terminal and a coil according to a modified example.

### [Modes of the Invention]

Hereinafter, exemplary embodiments of the present invention will be described in detail with reference to the drawings.

However, the technical concept of the present invention is not limited to some embodiments disclosed below but can be implemented in a variety of different forms. One or more of components of the embodiments may be selectively combined or substituted with another within the scope of the technical concept of the present invention as defined by claim 1.

Also, unless defined otherwise, the terms (including technical and scientific terms) used herein may be used as meanings capable of being commonly understood by one of ordinary skill in the art. Also, terms defined in generally used dictionaries may be construed in consideration of the contextual meanings of the related art.

Also, the terms used herein are intended to describe the embodiments but not intended to restrict the present invention.

Throughout the specification, unless particularly stated otherwise, singular forms include plural forms. When stated as "at least one (or one or more) of A, B, and C," one or more of all combinations of A, B, and C may be included.

Also, in describing components of the embodiments of the present invention, the terms such as first, second, A, B, (a), (b), and the like may be used.

These terms are merely for distinguishing one element from another, and the essential, order, sequence, and the like of corresponding elements are not limited by the terms.

Also, when it is stated that one element is "connected," or "coupled" to another, the element may not only be directly connected or coupled to the other element but may also be connected or coupled to the other element with another intervening element.

Also, when it is stated that an element is formed or disposed "above or below" another element, the two elements may not only come into direct contact with each other but also still another element may be formed or disposed between the two elements. Also, being "above (on) or below (beneath)" may include not only being in an upward direction but also being in a downward direction on the basis of one element.

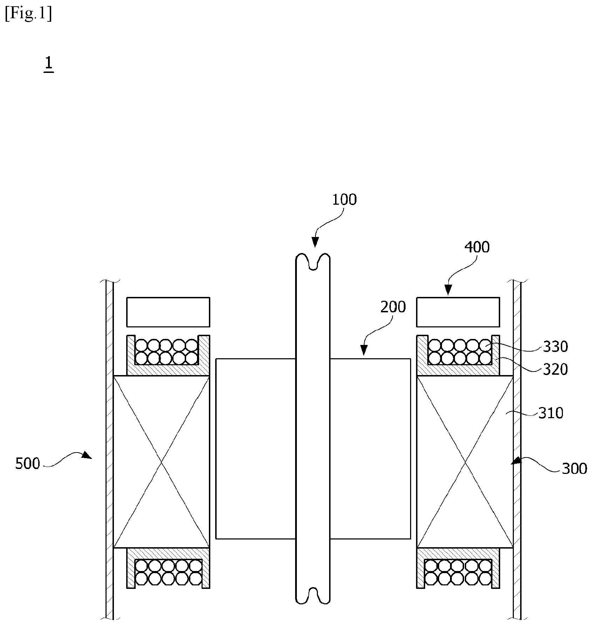

FIG. 1 is a view illustrating a motor according to an embodiment.

Referring to FIG. 1, the motor according to the embodiment may include a rotating shaft 100, a rotor 200, a stator 300, a busbar 400, and a housing 500.

The rotating shaft 100 may be coupled to the rotor 200. When electromagnetic interaction occurs between the rotor 200 and the stator 300 through current supply, the rotor 200 rotates and the rotating shaft 100 rotates in connection therewith. The rotating shaft 100 may be connected to a steering device of a vehicle and may transmit a force of assisting a steering force.

The rotor 200 and the stator 300 rotate through electrical interaction.

The rotor 200 may include a rotor core and a magnet. The rotor core may be implemented to be a shape in which a plurality of plates having a circular thin steel plate shape are stacked or to be one cylindrical shape. A hole to which the rotating shaft 100 is coupled may be formed in a center of the rotor core.

The stator 300 is disposed outside the rotor 200. The stator 300 may include a stator core 310, an insulator 320, and a coil 330. The insulator 320 is mounted on the stator core 310. The coil 330 is wound on the insulator 320.

The rotor 200 and the stator 300 may be accommodated inside the housing 500.

The busbar 400 may be disposed above the stator 300.

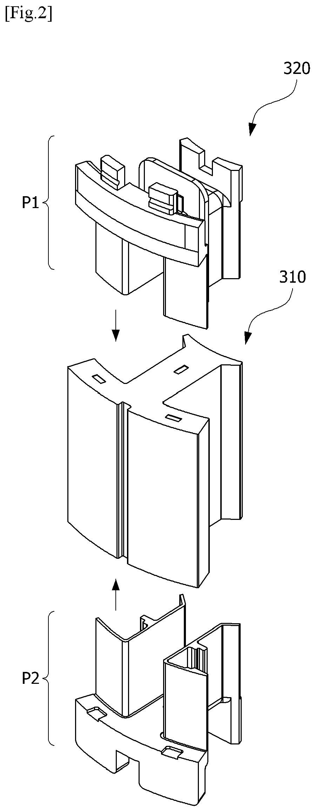

FIG. 2 is a view illustrating the stator core and the insulator.

Referring to FIG. 2, the insulator 320 is mounted on the stator core 310. The insulator 320 may include an upper part P1 and a lower part P2. The upper part P1 may be mounted on the stator core 310 from above, and the lower part P2 may be mounted on the stator core 310 from below.

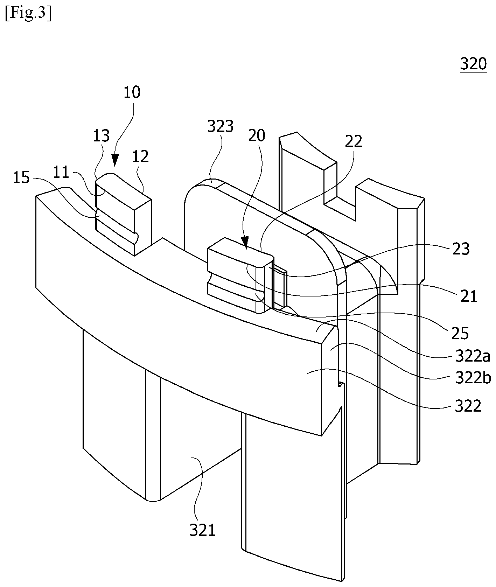

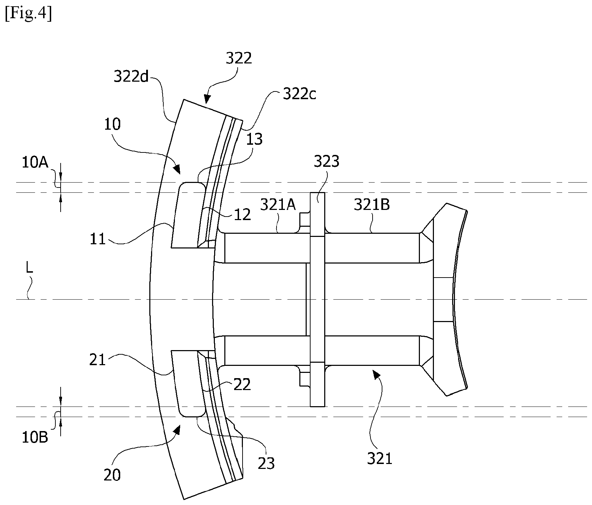

FIG. 3 is a perspective view of the insulator, and FIG. 4 is a plan view of the insulator.

Referring to FIG. 3, the insulator 320 may include a body 321, a first guide 322, and a second guide 323.

The body 321 is a part on which the coil 330 is wound and disposed. The body 321 may include a first body 321A and a second body 321B. On the basis of a radial direction of the stator 300, the first body 321A may be disposed outside the second body 321B. The second guide 323 is disposed on a boundary between the first body 321A and the second body 321B.

The first guide 322 is disposed extend upward from an outside of the body 321. The first guide 322 includes a first protrusion 10 and a second protrusion 20. The first protrusion 10 and the second protrusion 20 protrude from a top surface 322a of the first guide 322. The first protrusion 10 and the second protrusion 20 are aligned and disposed along a lateral direction of the first guide 322. Also, the first protrusion 10 and the second protrusion 20 are disposed to face each other with a space therebetween. The space between the first protrusion 10 and the second protrusion 20 is a space for cutting of the coil 330.

The first guide 322 may include a first inner surface 322c and a first outer surface 322d. The first protrusion 10 and the second protrusion 20 may be disposed between the first inner surface 322c and the first outer surface 322d on the basis of a radial direction.

The first protrusion 10 and the second protrusion 20 may include second outer surfaces 11 and 21, second inner surfaces 12 and 22, side surfaces 13 and 23, and grooves 15 and 25, respectively. The grooves 15 and 25 may be concavely disposed on the second outer surface 11. Also, the grooves 15 and 25 may be disposed along the lateral direction of the first guide 322.

Each of the first protrusion 10 and the second protrusion 20 may be disposed while being spaced apart from an edge formed by the top surface 322a and a side surface 322b of the first guide 322. This is to secure a detour space for the coil 330 being transferred to an outside of the first protrusion 10 or the second protrusion 20 after being wound.

On the basis of a reference line L passing a center of the first guide 322 in the lateral direction, the first protrusion 10 may be disposed on one side of the reference line L and the second protrusion 20 may be disposed on the other side of the reference line L. The first protrusion 10 and the second protrusion 20 may be disposed to be symmetrical on the basis of the reference line L.

This is to support the coil 330 being wound on the first protrusion 10 and the second protrusion 20 in a balanced way. Primarily, after the coil 330 is wound on the first body 321A, the coil 330 detours to the first protrusion 10 and the second protrusion 20 and then is guided to the second body 321B to be wound. Accordingly, supporting the coil 330 by the first protrusion 10 and the second protrusion 20 in a lateral direction of the insulator 320 in a balanced way becomes a significant factor in smoothly performing winding on the second body 321B.

The first protrusion 10 and the second protrusion 20 include protruding areas 10A and 10B, respectively. The protruding areas 10A and 10B protrude further than the second guide 323 in the lateral direction of the insulator 320. This is to secure a space for detouring to the first protrusion 10 after winding on the first body 321A. Also, this is to secure a space for the coil 330 being guided to the second body 321B to start winding thereon after detouring to the first protrusion 10 and the second protrusion 20.

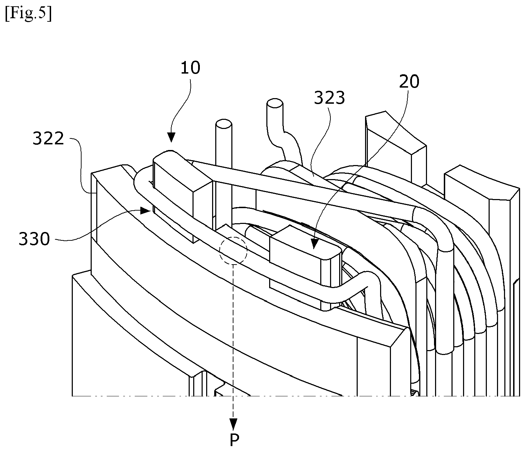

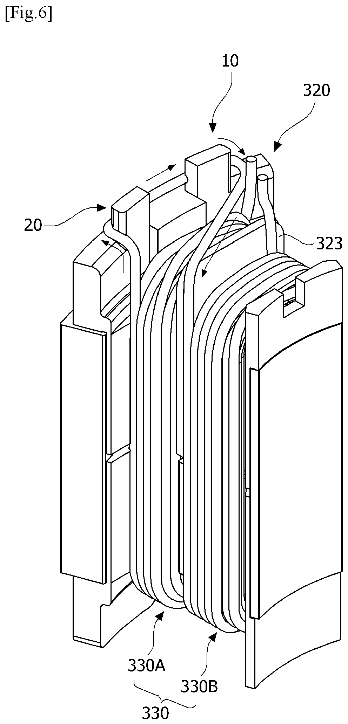

FIG. 5 is a view illustrating a coated part of the coil, and FIG. 6 is a view illustrating a winding process.

Referring to FIGS. 5 and 6, cutting is performed in a cutting area P of the coil 330 located between the first protrusion 10 and the second protrusion 20.

After the winding on the first body 321A is completed, the coil 330 is guided to the outside of the second protrusion 20. Also, the coil 330 passes around the second protrusion 20 and the first protrusion 10 and is guided toward the second body 321B. The coil 330 passes around the first protrusion 10 and is completely wound on the second body 321B. When the winding is completed, the coil 330 is disposed in the space between the first protrusion 10 and the second protrusion 20. Also, cutting is performed in the cutting area P.

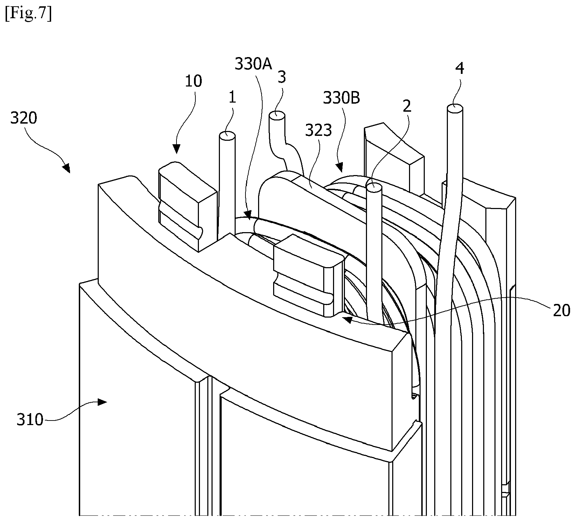

FIG. 7 is a view illustrating the coil after being cut.

Referring to FIGS. 6 and 7, when the cutting is performed, the coil 330 is divided into a first coil 330A and a second coil 330B. The first coil 330A has been wound on the first body 321A. The second coil 330B has been wound on the second body 321B. The first coil 330A includes a first end 1 and a second end 2. The second coil 330B includes a third end 3 and a fourth end 4. The second end 2 and the fourth end 4 are formed by cutting.

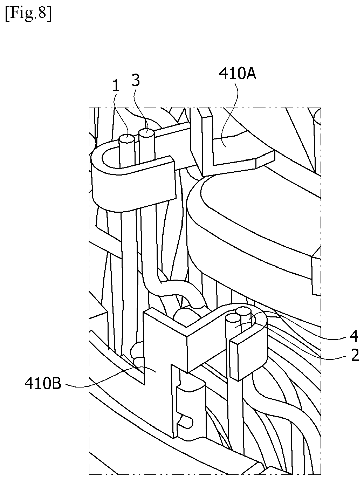

FIG. 8 is a view illustrating connection between a terminal and the coil.

Referring to FIG. 8, the first end 1 and the third end 3 may be fused and connected to a first terminal 410A together. The first terminal 410A may be one of a U-phase terminal, a V-phase terminal, and a W-phase terminal.

The second end 2 and the fourth end 4 may be fused and connected to a second terminal 410B together. The second terminal 410B may be a neutral terminal.

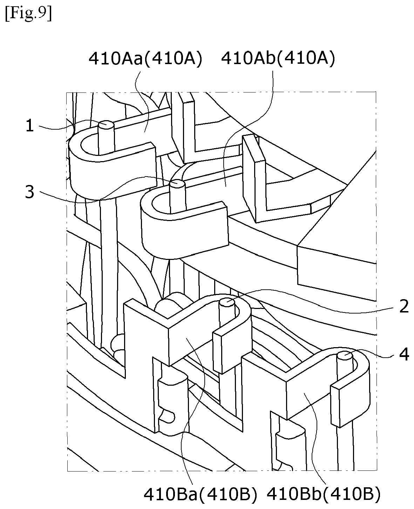

FIG. 9 is a view illustrating connection between a terminal and a coil according to a modified example.

Referring to FIG. 9, the first terminal 410A may include a 1-1 terminal 410Aa and a 1-2 terminal 410Ab. The 1-1 terminal 410Aa and the 1-2 terminal 410Ab may be electrically separated from each other. The second terminal 410B may include a 2-1 terminal 410Ba and a 2-2 terminal 410Bb. The 2-1 terminal 410Ba and the 2-2 terminal 410Bb may be electrically separated from each other.

The first coil 330A and the second coil 330B may be electrically separated.

The first end 1 of the first coil 330A may be coupled to the 1-1 terminal 410Aa. The third end 3 of the second coil 330B may be coupled to the 1-2 terminal 410Ab. The second end 2 of the second coil 330B may be coupled to the 2-1 terminal 410Ba. The fourth end 4 of the second coil 330B may be coupled to the 2-1 terminal 410Bb. Here, each of the 1-1 terminal 410Aa and the 1-2 terminal 410Ab may be any one of a U-phase terminal, a V-phase terminal, and a W-phase terminal. Also, the 2-1 terminal 410Ba and the 2-2 terminal 410Bb may be neutral terminals.

## Claims

1. A motor comprising:
a housing (500);
a stator (300) disposed in the housing;
a rotor (200) disposed in the stator; and
a shaft (100) coupled to the rotor,
wherein the stator (300) comprises a stator core (310), an insulator (320) disposed on the stator core, and a coil (320) disposed on the insulator,
wherein the insulator (320) comprises a body (321) on which the coil (320) is disposed, a first guide (322) extending from one side of the body, and a first protrusion (10) and a second protrusion (20) which protrude from a top surface of the first guide (322), and
wherein the first protrusion (10) and the second protrusion (20) are disposed to be spaced apart from each other to form a space in a circumferential direction on the basis of a center of the stator,
wherein the body (321) comprises a first body (321A) and a second body (321B) disposed inside the first body (321A), and
wherein the insulator (320) comprises a second guide (323) protruding upward in an axial direction of the motor from the body (321) between the first body (321A) and the second body (321B),
wherein the first protrusion (10) and the second protrusion (2) comprise areas protruding further than the second guide (323) in a lateral direction of the insulator (320).
wherein the first guide (322) comprises a first inner surface (322c) and a first outer surface (322d), and
wherein the first protrusion (10) and the second protrusion (20) are disposed between the first inner surface and the first outer surface on the basis of a lateral direction of the first guide (322), **characterized by** the fact that
each of the first protrusion (10) and the second protrusion (20) comprises a second inner surface (22, 12), a second outer surface (21, 11), and a groove (15), and
wherein the groove (15) is disposed on the second outer surface (21, 11) and disposed along the lateral direction of the first guide (322).

2. The motor of claim 1, wherein the first protrusion (10) and the second protrusion (20) are disposed to be spaced apart from an edge formed by a side surface and the top surface of the first guide (322).

3. The motor of claim 1, wherein, on the basis of a reference line passing through a center of the body (321) in a lateral direction, the first protrusion (10) is disposed on one side of the reference line (L),
wherein the second protrusion (20) is disposed on the other side of the reference line (L), and
wherein the first protrusion (10) and the second protrusion (20) are disposed to be symmetrical on the basis of the reference line (L).

4. The motor of claim 1, wherein the coil comprises a first coil (330A) wound on the first body (321A) and a second coil (330B) wound on the second body (321B).

5. The motor of claim 4, wherein the first coil (330A) comprises a first end (1) disposed on one side and a second end (2) disposed on the other side on the basis of the reference line (L), and
wherein the second coil (330B) comprises a third end (3) disposed on one side and a fourth end (4) disposed on the other side on the basis of the reference line (L).

6. The motor of claim 5, comprising a terminal disposed above the stator,
wherein the terminal comprises a first terminal and a second terminal,
wherein the first terminal is coupled to the first end and the third end, and
wherein the second terminal is coupled to the second end and the fourth end.

7. The motor of claim 5, comprising a terminal disposed above the stator (300),
wherein the terminal comprises a first terminal (410A) and a second terminal (410B),
wherein the first terminal (410A) comprises a 1-1 terminal and a 1-2 terminal,
wherein the second terminal (410B) comprises a 2-1 terminal and a 2-2 terminal,
wherein the 1-1 terminal is coupled to the first end (1),
wherein the 1-2 terminal is coupled to the third end (3),
wherein the 2-1 terminal is coupled to the second end (2), and
wherein the 2-2 terminal is coupled to the fourth end (4).

8. The motor according to claim 6 or 7, wherein the first terminal (410A) is any one of a U-phase terminal, a V-phase terminal, and a W-phase terminal, and
wherein the second terminal (410B) is a neutral terminal.

## Patentansprüche

1. Motor umfassend:
ein Gehäuse (500);
einen Stator (300), der in dem Gehäuse angeordnet ist;
einen Rotor (200), der in dem Stator angeordnet ist; und
eine Welle (100), die mit dem Rotor gekoppelt ist,
wobei der Stator (300) einen Statorkern (310), einen an dem Statorkern angeordneten Isolator (320), und eine an dem Isolator angeordnete Spule (320) umfasst,
wobei der Isolator (320) einen Körper (321), an dem die Spule (320) angeordnet ist, eine erste Führung (322), die sich von einer Seite des Körpers erstreckt, und einen ersten Vorsprung (10) und einen zweiten Vorsprung (20) umfasst, die von einer oberen Oberfläche der ersten Führung (322) vorstehen, und
wobei der erste Vorsprung (10) und der zweite Vorsprung (20) dazu angeordnet sind, voneinander beabstandet zu sein, um einen Raum in einer Umfangsrichtung auf der Basis eines Zentrums des Stators zu bilden,
wobei der Körper (321) einen ersten Körper (321A) und einen innerhalb des ersten Körpers (321A) angeordneten zweiten Körper (321B) umfasst, und
wobei der Isolator (320) eine zweite Führung (323) umfasst, die in einer Axialrichtung des Motors von dem Körper (321) zwischen dem ersten Körper (321A) und dem zweiten Körper (321B) nach oben vorsteht,
wobei der erste Vorsprung (10) und der zweite Vorsprung (20) Bereiche umfassen, die in einer lateralen Richtung des Isolators (320) weiter als die zweite Führung (323) vorstehen,
wobei die erste Führung (322) eine erste innere Oberfläche (322c) und eine erste äußere Oberfläche (322d) umfasst, und
wobei der erste Vorsprung (10) und der zweite Vorsprung (20) zwischen der ersten inneren Oberfläche und der ersten äußeren Oberfläche auf der Basis einer lateralen Richtung der ersten Führung (322) angeordnet sind, **dadurch gekennzeichnet, dass**
jeder des ersten Vorsprungs (10) und des zweiten Vorsprungs (20) eine zweite innere Oberfläche (22, 12), eine zweite äußere Oberfläche (21, 11) und eine Nut (15) umfasst, und
wobei die Nut (15) an der zweiten äußeren Oberfläche (21, 11) angeordnet und entlang der lateralen Richtung der ersten Führung (322) angeordnet ist.

2. Motor nach Anspruch 1, wobei der erste Vorsprung (10) und der zweite Vorsprung (20) dazu angeordnet sind, von einer Kante beabstandet zu sein, die durch eine Seitenoberfläche und die obere Oberfläche der ersten Führung (322) gebildet ist.

3. Motor nach Anspruch 1, wobei, auf der Basis einer Referenzlinie, die durch ein Zentrum des Körpers (321) in einer lateralen Richtung hindurchgeht, der erste Vorsprung (10) auf einer Seite der Referenzlinie (L) angeordnet ist,
wobei der zweite Vorsprung (20) auf der anderen Seite der Referenzlinie (L) angeordnet ist, und
wobei der erste Vorsprung (10) und der zweite Vorsprung (20) dazu angeordnet sind, auf der Basis der Referenzlinie (L) symmetrisch zu sein.

4. Motor nach Anspruch 1, wobei die Spule eine erste Spule (330A), die auf den ersten Körper (321A) gewickelt ist, und eine zweite Spule (330B) umfasst, die auf den zweiten Körper (321B) gewickelt ist.

5. Motor nach Anspruch 4, wobei die erste Spule (330A) ein erstes Ende (1), das auf einer Seite angeordnet ist, und eine zweites Ende (2) umfasst, das auf der Basis der Referenzlinie (L) auf der anderen Seite angeordnet ist, und
wobei die zweite Spule (330B) ein drittes Ende (3), das auf einer Seite angeordnet ist und ein viertes Ende (4) umfasst, das auf der Basis der Referenzlinie (L) auf der anderen Seite angeordnet ist.

6. Motor nach Anspruch 5, umfassend einen Anschluss, der über den Stator angeordnet ist,
wobei der Anschluss einen ersten Anschluss und einen zweiten Anschluss umfasst,
wobei der erste Anschluss mit dem ersten Ende und dem dritten Ende gekoppelt ist, und
wobei der zweite Anschluss mit dem zweiten Ende und dem vierten Ende gekoppelt ist.

7. Motor nach Anspruch 5, umfassend einen Anschluss, der über dem Stator (300) angeordnet ist,
wobei der Anschluss einen ersten Anschluss (410A) und einen zweiten Anschluss (410B) umfasst,
wobei der erste Anschluss (410A) einen 1-1-Anschluss und einen 1-2-Anschluss umfasst,
wobei der zweite Anschluss (410B) einen 2-1-Anschluss und einen 2-2-Anschluss umfasst,
wobei der 1-1-Anschluss mit dem ersten Ende (1) gekoppelt ist,
wobei der 1-2-Anschluss mit dem dritten Ende (3) gekoppelt ist,
wobei der 2-1-Anschluss mit dem zweiten Ende (2) gekoppelt ist, und
wobei der 2-2-Anschluss mit dem vierten Ende (4) gekoppelt ist.

8. Motor nach Anspruch 6 oder 7, wobei der erste Anschluss (410A) irgendeiner von einem U-Phasen-Anschluss, einem V-Phasen-Anschluss und einem W-Phasen-Anschluss ist, und
wobei der zweite Anschluss (410B) ein neutraler Anschluss ist.

## Revendications

1. Un moteur comprenant :
un boîtier (500) ;
un stator (300) disposé dans le boîtier ;
un rotor (200) disposé dans le stator ; et
un arbre (100) relié au rotor,
le stator (300) comprenant un noyau de stator (310), un isolant (320) disposé sur le noyau de stator, et une bobine (320) disposée sur l'isolant,
l'isolateur (320) comprenant un corps (321) sur lequel la bobine (320) est disposée, un premier guide (322) s'étendant depuis un côté du corps, et une première saillie (10) et une deuxième saillie (20) qui font saillie à partir d'une surface supérieure du premier guide (322), et
la première saillie (10) et la deuxième saillie (20) étant disposées de façon à être espacées l'une de l'autre afin de former un espace dans une direction circonférentielle par rapport à un centre du stator,
le corps (321) comprenant un premier corps (321A) et un deuxième corps (321B) disposé à l'intérieur du premier corps (321A), et
l'isolateur (320) comprenant un deuxième guide (323) faisant saillie vers le haut dans une direction axiale du moteur depuis le corps (321) entre le premier corps (321A) et le deuxième corps (321B),
la première saillie (10) et la deuxième saillie (2) comprenant des zones faisant saillie plus loin que le deuxième guide (323) dans une direction latérale de l'isolateur (320),
le premier guide (322) comprenant une première surface interne (322c) et une première surface externe (322d), et
la première saillie (10) et la deuxième saillie (20) étant disposées entre la première surface intérieure et la première surface extérieure par rapport à une direction latérale du premier guide (322), **caractérisé par le fait que**
chaque saillie parmi la première saillie (10) et la deuxième saillie (20) comprend une deuxième surface interne (22, 12), une deuxième surface externe (21, 11) et une rainure (15), et
la rainure (15) est disposée sur la deuxième surface externe (21, 11) et disposée le long de la direction latérale du premier guide (322).

2. Le moteur selon la revendication 1, dans lequel la première saillie (10) et la deuxième saillie (20) sont disposées de façon à être espacées d'un bord formé par une surface latérale et la surface supérieure du premier guide (322).

3. Le moteur selon la revendication 1, dans lequel, par rapport à une ligne de référence passant par un centre du corps (321) dans une direction latérale, la première saillie (10) est disposée sur un côté de la ligne de référence (L),
dans lequel la deuxième saillie (20) est disposée de l'autre côté de la ligne de référence (L), et
la première saillie (10) et la deuxième saillie (20) étant disposées de manière à être symétriques par rapport à la ligne de référence (L).

4. Le moteur selon la revendication 1, dans lequel la bobine comprend une première bobine (330A) enroulée sur le premier corps (321A) et une deuxième bobine (330B) enroulée sur le deuxième corps (321B).

5. Le moteur selon la revendication 4, dans lequel la première bobine (330A) comprend une première extrémité (1) disposée d'un côté et une deuxième extrémité (2) disposée de l'autre côté par rapport à la ligne de référence (L), et
la deuxième bobine (330B) comprenant une troisième extrémité (3) disposée d'un côté et une quatrième extrémité (4) disposée de l'autre côté par rapport à la ligne de référence (L).

6. Le moteur selon la revendication 5, comprenant une borne disposée au-dessus du stator,
la borne comprenant une première borne et une deuxième borne,
la première borne étant reliée à la première extrémité et à la troisième extrémité, et
la deuxième borne étant reliée à la deuxième extrémité et à la quatrième extrémité.

7. Le moteur selon la revendication 5, comprenant une borne disposée au-dessus du stator (300),
la borne comprenant une première borne (410A) et une deuxième borne (410B),
la première borne (410A) comprenant une borne 1-1 et une borne 1-2,
la deuxième borne (410B) comprenant une borne 2-1 et une borne 2-2,
la borne 1-1 étant reliée à la première extrémité (1),
la borne 1-2 étant reliée à la troisième extrémité (3),
la borne 2-1 est reliée à la deuxième extrémité (2), et
la borne 2-2 étant reliée à la quatrième extrémité (4).

8. Le moteur selon la revendication 6 ou la revendication 7, dans lequel la première borne (41 OA) est l'une quelconque parmi une borne de phase U, une borne de phase V et une borne de phase W, et
dans lequel la deuxième borne (410B) est une borne neutre.
